# EUROPÄISCHE PATENTSCHRIFT

(11) **EP 3 060 826 B1**
(45) Veröffentlichungstag und Bekanntmachung des Hinweises auf die Patenterteilung: **29.11.2017**
(21) Anmeldenummer: 14801944.1
(22) Anmeldetag: 22.10.2014
(51) Int. Cl.: F16F 1/44, F16F 15/02, F16F 15/08, F16F 13/10

(54) **AXIAL DÄMPFENDES ELASTOMERLAGER, INSBESONDERE FÜR EIN KRAFTFAHRZEUG**
PALIER D'AMORTISSEMENT POUR VEHICULE
AXIAL DAMPER BEARING FOR VEHICLE

(30) Priorität: 23.10.2013 DE 102013221503
(43) Veröffentlichungstag der Anmeldung: 31.08.2016
(73) Patentinhaber: BOGE Elastmetall GmbH, 49401 Damme (DE); Volkswagen AG, 38436 Wolfsburg (DE)
(72) Erfinder: SCHARF, Jörg, 65558 Eppenrod (DE); PAPE, Jens, 38518 Gifhorn (DE)
(74) Vertreter: Bossmeyer, Jörg Peter
(86) Internationale Anmeldenummer: PCT/EP2014/072692
(87) Internationale Veröffentlichungsnummer: WO 2015/059214

(56) Entgegenhaltungen:
- EP-A2- 1 270 993
- EP-A2- 2 436 948
- WO-A1-89/11416

## Beschreibung

Die Erfindung betrifft ein axial dämpfendes Elastomerlager, insbesondere für ein Kraftfahrzeug, gemäß dem Oberbegriff des Patentanspruchs 1.

Axial dämpfende Elastomerlager für Kraftfahrzeuge sind in vielerlei Ausgestaltungen bekannt. Wesentliche Bestandteile eines axial dämpfenden Elastomerlagers sind eine elastomere Tragfeder und ein diese umschließend aufnehmendes Gehäuseteil. In einem im Kraftfahrzeug verbauten Einbauzustand bilden sich zwischen der elastomeren Tragfeder und dem Gehäuseteil häufig schöpfende Geometriebereiche aus. Unter schöpfenden Geometriebereichen sind dabei Hohlräume oder Konturen zu verstehen, in denen sich bei im Wesentlichen waagerecht stehendem Kraftfahrzeug Flüssigkeit, insbesondere Wasser, sammeln kann. In diesen schöpfenden Geometriebereichen sammelt sich häufig Spritzwasser, beispielsweise, wenn das axial dämpfende Elastomerlager als in einem relativ geringen Abstand zu einer Fahrbahn montiertes Motorlager ausgebildet ist. Auch Wasser aus überschwemmten Straßen oder Pfützen kann sich im Fahrbetrieb in den schöpfenden Geometriebereichen sammeln. Während einer Motorwäsche kann sich darüber hinaus ebenfalls Wasser in schöpfenden Geometriebereichen axial dämpfender Elastomerlager sammeln, welche an höher gelegenen Verbauorten im Kraftfahrzeug montiert sind. Dies trifft beispielsweise auf Federbeinstützlager zu.

Wenn in den schöpfenden Geometriebereichen angesammeltes Wasser gefriert, führt dies häufig zu einem signifikant verschlechterten Dämpfungs- und Akustikverhalten des axial dämpfenden Elastomerlagers. Darüber hinaus kann das Elastomerlager durch gefrierendes Wasser auch zerstört werden, beispielsweise durch Aufplatzen des die elastomere Tragfeder aufnehmenden Gehäuseteils.

Aus dem Stand der Technik ist bekannt, Gehäuseteile von axial dämpfenden Elastomerlagern an den am niedrigsten gelegenen Punkten der schöpfenden Geometriebereiche mit Ablauföffnungen zu versehen, um die schöpfenden Geometriebereiche entwässern zu können. Eine derartige Entwässerung, die auch als Drainage bezeichnet wird, ist beispielsweise aus EP 1 270 993 A2 oder DE 601 11 208 T2 bekannt.

Das Einbringen der Ablauföffnungen in die Gehäuseteile erfolgt aus Kostengründen üblicherweise mit Betriebsmitteln, die zur Herstellung der Gehäuseteile selbst dienen. Dabei kann es sich beispielsweise um ein Druckgusswerkzeug handeln, wenn das Gehäuseteil als ein Druckgussteil ausgelegt ist. Aus dem Stand der Technik ist bekannt, Ablauföffnungen in Gehäuseteile, die als Druckgussteile ausgelegt sind, mittels sogenannter Werkzeugschieber einzubringen. Die Werkzeugschieber weisen dabei eine Arbeitsrichtung auf, die in etwa rechtwinklig zu einer Entformungsrichtung des Druckgusswerkzeuges angeordnet ist.

Aufgabe der Erfindung ist es, durch eine vereinfachte Herstellung ein kostengünstiges axial dämpfendes Elastomerlager mit zumindest einer Ablauföffnung bereitzustellen.

Diese Aufgabe wird gemäß der vorliegenden Erfindung gelöst durch ein gattungsgemäßes axial dämpfendes Elastomerlager, welches zusätzlich die kennzeichnenden Merkmale des Patentanspruchs 1 aufweist.

Bevorzugte Ausführungsformen und Weiterbildungen sind Gegenstand der Unteransprüche.

Die Erfindung sieht demnach ein axial dämpfendes Elastomerlager vor, insbesondere ein axial dämpfendes Elastomerlager für ein Kraftfahrzeug, mit einer topfförmigen Aufnahme zur umschließenden Aufnahme einer elastomeren Tragfeder. Die topfförmige Aufnahme ist durch Urformen hergestellt und in einer Entformungsrichtung entformbar. Sie weist eine Umfangswandung mit zumindest einer Ablauföffnung auf. Die Erfindung schlägt vor, dass die zumindest eine Ablauföffnung eine sich in der Entformungsrichtung erstreckende Freimachung aufweist.

Das axial dämpfende Elastomerlager kann u. a. als Aggregatlager, insbesondere als Motorlager oder Getriebelager, oder als Federbeinstützlager ausgebildet sein. Unter einer topfförmigen Aufnahme ist im Zusammenhang mit der vorliegenden Erfindung ein Bauteil zu verstehen, das zumindest eine topfförmige Aufnahme aufweist. Das Bauteil kann darüber hinaus weitere Geometriebereiche wie Anschlussgeometrien zur Anbindung desselben an benachbarte Bauteile aufweisen, beispielsweis in Form von ebenfalls durch Urformen hergestellter Füße. Das die topfförmige Aufnahme enthaltende Bauteil kann ergänzend oder alternativ noch weitere Aufnahmen für weitere Bauteile aufweisen.

Unter Urformen ist im Zusammenhang mit der vorliegenden Erfindung ein Herstellungsverfahren zu verstehen, bei dem aus einer Schmelze oder einem plastifizierten Material ein als Gussteil ausgebildeter, fester Körper hergestellt wird. Hierzu wird die Schmelze oder das plastifizierte Material in flüssigem bzw. plastifiziertem Zustand in eine Form gefüllt und nach erfolgter Erstarrung bzw. Aushärtung aus dieser entformt. Entformen bezeichnet dabei ein Herauslösen des erstarrten bzw. ausgehärteten Materials aus der Form. Damit dies gelingen kann, muss die Form durch sog. Entformungsschrägen freigemacht sein. Dies bedeutet, dass der Querschnitt einer Form auf der Seite, auf der das Gussteil aus der Form herausgelöst werden soll, größer sein muss als auf einer dieser gegenüberliegenden Seite. Diese Vorgehensweise wird im Formenbau auch als Freimachen bezeichnet.

Die zumindest eine Ablauföffnung ist in Bezug auf eine Einbaulage im Kraftfahrzeug, wie aus dem Stand der Technik bekannt, an dem am niedrigsten gelegenen Punkt eines zwischen der topfförmigen Aufnahme und der elastomeren Tragfeder ausgebildeten schöpfenden Geometriebereichs angeordnet. Dabei ist der schöpfende Geometriebereich, wiederum in Einbaulage in dem Kraftfahrzeug betrachtet, oberhalb der elastomeren Tragfeder angeordnet. Der schöpfende Geometriebereich kann beispielsweise eine zwischen der topfförmigen Aufnahme und der elastomeren Tragfeder angeordnete Rinne sein, die die elastomere Tragfeder im Einbauzustand auf im Wesentlichen gleichen Höhenniveau umgibt. Unter der Entformbarkeit in Entformungsrichtung ist im Zusammenhang mit der vorliegenden Erfindung eine Entformbarkeit sowohl in einer positiven als auch in einer negativen Entformungsrichtung gemeint. In der Regel steht bei der Entformung ein Werkzeugteil fest, während sich ein anderes relativ hierzu bewegt. Es sind allerdings auch andere Konstellationen in Bezug auf die Entformung in Entformungsrichtung vorstellbar, beispielsweise die Bewegung von mehreren Werkzeugteilen in positiver und/oder negativer Entformungsrichtung.

Bei einer Parallelprojektion in Entformungsrichtung auf das Elastomerlager entlang der Freimachung wird der Blick auf eine projizierte Fläche einer Wandung, die häufig auch als Laibung oder Leibung bezeichnet wird, der Ablauföffnung freigegeben. Unter der sich in der Entformungsrichtung erstreckenden Freimachung ist in Bezug auf die vorliegende Erfindung ein zur Sicherstellung der Entformbarkeit freigemachter Konturbereich des Gussteils zu verstehen.

Beispielsweise kann eine entformbare Innenkontur oder ein Teil der entformbaren Innenkontur der topfförmigen Aufnahme nach Art einer Kegelstumpf-Mantelfläche ausgebildet sein. Eine Außenkontur der topfförmigen Aufnahme kann als Zylindermantelfläche ausgebildet sein. Die Innenkontur und die Außenkontur weisen eine gemeinsame Mittelachse auf, die sich ebenfalls in der Entformungsrichtung erstreckt. Zur Erzeugung einer Ablauföffnung kann die Außenkontur mit einer parallel zur Mittelachse angeordneten Abflachung derart versehen sein, dass die Abflachung in ihrem axialen Verlauf die Innenkontur durchdringt. In dem Bereich, in dem die Abflachung die Innenkontur der topfförmigen Aufnahme durchdringt, wird die Ablauföffnung gebildet.

Durch die Ausbildung der Ablauföffnung mit einer sich in der Entformungsrichtung erstreckenden Freimachung kann die Ablauföffnung zusammen mit der topfförmigen Aufnahme durch ein Urformverfahren hergestellt und anschließend komplett in der Entformungsrichtung entformt werden. Ein solcher Prozess wird auch als Top-Down-Prozess oder Auf-Zu-Prozess bezeichnet. Auf relativ teure Werkzeugschieber mit einer Arbeitsrichtung im Wesentlichen senkrecht zu der Entformungsrichtung zur Einbringung der Ablauföffnung kann verzichtet werden. Durch den Verzicht auf Werkzeugschieber, die durch einen im Herstellungsprozess zu durchlaufenden Arbeitshub relativ viel Bauraum beanspruchen, können die für das Urformen erforderlichen Werkzeuge relativ kompakt ausgelegt werden. Dadurch ist es möglich, eine deutlich höhere Anzahl an Formnestern je Betriebsmittel vorzusehen und somit je Arbeitsgang, auch Schuss genannt, eine höhere Anzahl an topfförmigen Aufnahmen herzustellen. Auf diese Weise können die anteiligen Investitionskosten je topfförmiger Aufnahme reduziert werden. Durch den Verzicht auf Werkzeugschieber können darüber hinaus die anteiligen Fertigungskosten reduziert werden, weil durch den Top-Down-Prozess Zeitanteile für Bewegungen der Werkzeugschieber entfallen. Auf diese Weise kann die Zeit für die Herstellung der topfförmigen Aufnahmen je Arbeitsgang, die auch als Takt-, Prozess- oder Zykluszeit bezeichnet wird, reduziert werden.

Bevorzugt ist die Freimachung durch eine erste und eine zweite Nut ausgebildet, wobei die erste und die zweite Nut in unterschiedliche Umfangsflächen der Umfangswandung eingelassen sind und einen gemeinsamen Überlappungsbereich ausbilden. Die erste und die zweite Nut erstrecken sich dabei jeweils in der Entformungsrichtung. Ist die Umfangswandung, abgesehen von herstellungsbedingt erforderlichen, geringfügigen Entformungsschrägen, im Wesentlichen hohlzylindrisch ausgebildet, bietet es sich an, die erste und die zweite Nut jeweils in einer Tiefe auszuführen, die größer oder gleich einer halben Wandstärke der Umfangswandung ausgebildet ist. Damit in dem gemeinsamen Überlappungsbereich die Ablauföffnung entstehen kann, muss die Summe der beiden Nuttiefen zumindest der Wandstärke der Umfangswandung im Bereich der Ablauföffnung entsprechen.

Das Ausbilden der ersten und der zweiten Nut mit einer Tiefe, die im Wesentlichen jeweils der halben Wandstärke entspricht, hat gießtechnische Vorteile. Während der Herstellung der topfförmigen Aufnahme kann sich das schmelzflüssige Material gut in dem Formnest der Werkzeug-Gießform verteilen.

Vorteilhaft ist die erste Nut in eine Außenumfangsfläche der Umfangswandung im Bereich der einem Boden der topfförmigen Aufnahme zugewandten Seite eingelassen und die zweite Nut in eine Innenumfangsfläche der Umfangswandung im Bereich der dem Boden der topfförmigen Aufnahme abgewandten Seite.

Die erste und die zweite Nut erstrecken sich dabei jeweils, aus entgegengesetzten Richtungen kommend, bis in den Überlappungsbereich, wo sie gemeinsam die Ablauföffnung ausbilden. Bei dieser Ausgestaltung ist eine robuste, bruchsichere Werkzeugauslegung möglich, weil Formteile zur Ausbildung der ersten und der zweiten Nut jeweils an unmittelbar benachbarte, massive Formteile angebunden oder einstückig mit diesen ausgebildet sind.

Gemäß einer Weiterbildung der Erfindung weist die Innenumfangsfläche der Umfangswandung im Bereich der dem Boden der topfförmigen Aufnahme zugewandten Seite einen stetigen Verlauf auf.

Unter einem stetigen Verlauf ist hier ein sog. tangentenstetiger Verlauf, auch krümmungsstetiger Verlauf genannt, wie beispielsweise aus dem Karosseriestyling bekannt, zu verstehen. Der stetige Verlauf kann sich auf die Umfangsrichtung und/oder auf die Entformungsrichtung beziehen. Auf diese Weise wird für die elastomere Tragfeder im Bereich der dem Boden der topfförmigen Aufnahme zugewandten Seite eine vollflächig umschließende Aufnahme bereitgestellt, die eine gleichmäßige Einleitung von Dämpfungskräften über die elastomere Tragfeder in die topfförmige Aufnahme ermöglicht. Dies ist besonders von Vorteil, wenn zwischen der elastomeren Tragfeder und der topfförmigen Aufnahme ein haftend mit der elastomeren Tragfeder verbundener Ring aus Kunststoff angeordnet ist. Dieser Ring aus Kunststoff, der alternativ auch aus Metall, insbesondere aus Stahl, gebildet sein kann, weist ebenso wie der von diesem eingefasste Umfangsbereich der elastomeren Tragfeder bevorzugt einen stetigen Verlauf auf.

Vorteilhaft weist die Außenumfangsfläche der Umfangswandung im Bereich der dem Boden der topfförmigen Aufnahme abgewandten Seite einen stetigen Verlauf auf. Der stetige Verlauf bezieht sich hier in erster Linie auf die Umfangsrichtung, kann sich alternativ oder zusätzlich aber auch auf die Entformungsrichtung beziehen. Durch einen stetigen Verlauf der Außenumfangsfläche der Umfangswandung, die gleichzeitig auch eine Außenkontur des fertigen Elastomerlagers bildet, können Verletzungen im Rahmen von Montagearbeiten an dem Kraftfahrzeug vermieden werden.

Bevorzugt weist die Innenumfangsfläche der Umfangswandung im Bereich der dem Boden der topfförmigen Aufnahme abgewandten Seite einen umlaufenden Absatz zur Aufnahme eines Deckelteils auf. Der umlaufende Absatz ist in Richtung der dem Boden der topfförmigen Aufnahme abgewandten Seite offen, insbesondere entformbar, und vorteilhaft kreisrund ausgeführt. Der Absatz, der für das Deckelteil bzw. für den Rand des Deckelteils eine definierte, flächige Aufnahme darstellt, kann durch Urformen oder durch Zerspanen hergestellt sein. Im Bereich des Absatzes weist die Umfangswandung eine reduzierte Wandstärke auf. Das Deckelteil ist bevorzugt als rotationssymmetrisches Blechteil ausgebildet, dessen Umfangsbereich von dem Absatz anliegend aufgenommen wird. Das Deckelteil kann alternativ auch als Kunststoff-Spritzgussteil ausgebildet sein.

Es ist günstig, wenn die Tiefe des Absatzes im Wesentlichen der Tiefe der zweiten Nut entspricht. Diese Ausführung bietet Vorteile bei der Herstellung durch Urformen, weil in dem Übergangsbereich zwischen dem Absatz und der zweiten Nut unterschiedliche Wandstärken und ein möglicherweise damit verbundenes ungünstiges Erstarrungsverhalten nach dem Urformen vermieden werden.

Zweckmäßig ist die Ablauföffnung im Querschnitt im Wesentlichen als Rechteck, insbesondere als Quadrat, mit verrundeten Ecken ausgebildet. Um den Herstellungs- und Abstimmungsaufwand bei der Werkzeugherstellung möglichst gering zu halten, wird für die Ablauföffnung ein quadratischer Querschnitt angestrebt. Eine Ablauföffnung mit quadratischem Querschnitt weist darüber hinaus eine größere Querschnittsfläche auf als ein darin einbeschriebener Kreis mit einem Radius, der der halben Seitenlänge des Quadrats entspricht. Sollte der Querschnitt bedingt durch Herstellungsabweichungen rechteckig ausfallen, ist dies für die Funktion der Ablauföffnung unerheblich. Zur Vermeidung von durch Kerbwirkung bedingten Spannungsspitzen in den Ecken des rechteckigen bzw. quadratischen Querschnitts werden diese Ecken verrundet.

Gemäß einer Alternative ist die Freimachung als ein von dem Boden ausgehender, die Umfangswandung durchsetzender Schlitz ausgebildet. Auf diese Weise ist es möglich, schöpfende Geometriebereiche des Elastomerlagers, die innerhalb der topfförmigen Aufnahme und, wiederum in Einbaulage in dem Kraftfahrzeug betrachtet, oberhalb und unterhalb der elastomeren Tragfeder angeordnet sind, über einen einzigen Schlitz zu entwässern. Diese Ausführung eignet sich besonders, wenn die elastomere Tragfeder im Bereich des Schlitzes von einem Ring aus Metall, insbesondere aus Stahl, umgeben ist, weil durch diesen bei Belastung des Elastomerlagers ein unerwünschtes Eindringen von Teilen der elastomeren Tragfeder in den Schlitz unterbunden wird.

Vorteilhaft ist zumindest die topfförmige Aufnahme aus Aluminium, insbesondere aus Aluminium-Druckguss, gebildet. Auf diese Weise wird ein stabiles und dennoch relativ leichtes Elastomerlager bereitgestellt.

Gemäß einer Weiterbildung sind die topfförmige Aufnahme und das Deckelteil durch Verrollen gefügt. Hierzu weist die Umfangswandung im Bereich des Absatzes eine reduzierte Wandstärke auf, wobei sich die reduzierte Wandstärke bei eingelegtem Deckelteil in Entformungsrichtung über dieses hinaus erstreckt und so einen Bördelrand ausbildet. Der Bördelrand wird bei eingelegtem Deckelteil zur Verbindung desselben mit der topfförmigen Aufnahme durch Verrollen, auch Rollbördeln genannt, in Richtung der Mittelachse umgeformt. Auf diese Weise wird eine stabile Verbindung zwischen der topfförmigen Aufnahme und dem Deckelteil bereitgestellt. Dies ist besonders von Bedeutung, wenn das Deckelteil einen Begrenzungsanschlag für Bewegungen der elastomeren Tragfeder darstellt. Der Bördelrand stellt an der Außenkontur des fertigen Elastomerlagers in diesem Bereich eine Verrundung bereit, die bei Montagearbeiten an dem Kraftfahrzeug Schutz vor Verletzungen bietet.

Gemäß einer alternativen Ausgestaltung der Erfindung ist zumindest die topfförmige Aufnahme aus Spritzguss-Kunststoff, insbesondere aus faserverstärktem Spritzguss-Kunststoff, gebildet. Die topfförmige Aufnahme aus Spritzguss-Kunststoff auszubilden, hat den Vorteil, dass die Dämpfungseigenschaften des Elastomerlagers verbessert werden, weil der Spritzguss-Kunststoff zur Dämpfung beiträgt. Besonders hoch belastete Bereiche der topfförmigen Aufnahme aus Spritzguss-Kunststoff können durch Einlegeteile verstärkt werden, die während der Herstellung durch Urformen, in diesem Fall durch Kunststoff-Spritzgießen, umspritzt werden. Durch die Verwendung von Spritzguss-Kunststoff für Komponenten des Elastomerlagers kann dessen Gewicht bzw. Masse reduziert werden.

Bevorzugt ist das Elastomerlager als sog. trockenes Elastomerlager ohne Dämpfungsfluid ausgebildet.

Bei einer Ausbildung des Elastomerlagers als sog. trockenes Elastomerlager kann der Boden der durch Urformen hergestellten, topfförmigen Aufnahme im Zuge der Herstellung in einem Arbeitsgang gleichzeitig mit Funktionsdurchbrüchen versehen werden. Die Funktionsdurchbrüche, die beispielsweise zur mittelbaren Anbindung der elastomeren Tragfeder an den Boden dienen, erstrecken sich dabei in der Entformungsrichtung.

Gemäß einer Alternative ist das Elastomerlager als Hydrolager mit einem Dämpfungsfluid ausgebildet.

Bei einer Ausbildung des Elastomerlagers als Hydrolager mit einem Dämpfungsfluid kann das die topfförmige Aufnahme enthaltende Bauteil eine weitere Aufnahme zur umschließenden Aufnahme einer Kanalscheibe aufweisen. Die weitere Aufnahme ist dabei in einem Arbeitsgang mit der topfförmigen Aufnahme durch Urformen hergestellt. Die topfförmige Aufnahme und die weitere Aufnahme weisen dieselbe Entformungsrichtung auf.

Im Folgenden wird die Erfindung anhand lediglich Ausführungsbeispiele darstellender Zeichnungen näher erläutert. Dabei zeigt:
- Fig. 1: eine perspektivische Schnittdarstellung eines Elastomerlagers nach dem Stand der Technik in einem Zusammenbauzustand;
- Fig. 2: eine Darstellung eines Elastomerlagers gemäß der Erfindung in einem Halbschnitt;
- Fig. 3: eine Einzelheit A gemäß Fig. 2 in vergrößerter Darstellung;
- Fig. 4: eine perspektivische Darstellung des Elastomerlagers gemäß der Erfindung in einer zweiten Ausführungsform in einer perspektivischen Schnittdarstellung und
- Fig. 5: eine Darstellung des Elastomerlagers gemäß der Erfindung in einer dritten Ausführungsform in einem Halbschnitt.

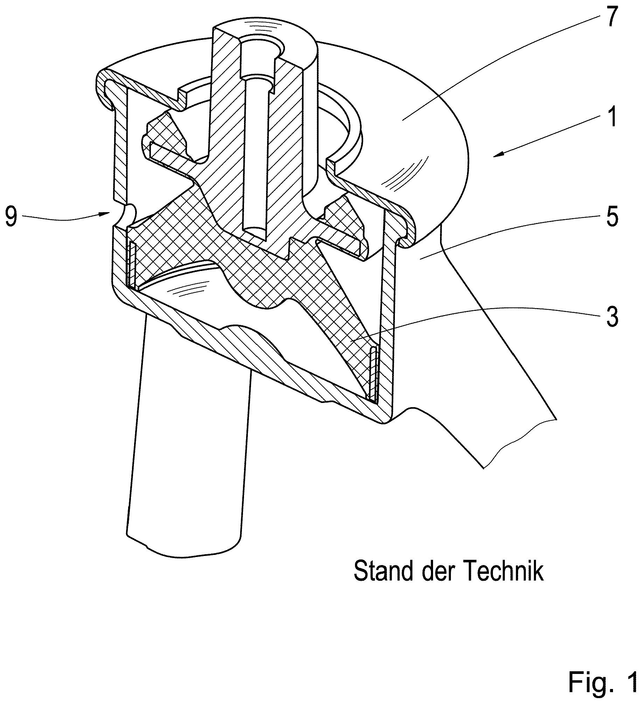

Fig. 1 zeigt ein axial dämpfendes Elastomerlager 1 wie es aus dem Stand der Technik bekannt ist. Das Elastomerlager 1 umfasst u. a. eine elastomere Tragfeder 3, die von einer topfförmigen Aufnahme 5 umschlossen wird. Die topfförmige Aufnahme 5 mit der darin aufgenommenen elastomeren Tragfeder 3 wird von einem Deckelteil 7 verschlossen. Das Deckelteil 7 ist rotationssymmetrisch ausgebildet und besteht aus Stahlblech. Es ist mittels einer Rollbördelung mit der topfförmigen Aufnahme 5 verbunden, wobei ein umlaufend überstehender Rand des Deckelteils eine umlaufende, nach außen gerichtete Wulst der topfförmigen Aufnahme 5 umgreift. Über eine Ablauföffnung 9 in einer Wandung der topfförmigen Aufnahme 5 wird ein Hohlraum entwässert, der im Wesentlichen durch die elastomere Tragfeder 3, die topfförmige Aufnahme 5 und das Deckelteil 7 umschlossen ist. Die Ablauföffnung 9 ist zylindrisch ausgebildet und erstreckt sich im Wesentlichen senkrecht zu der Wandung. Die topfförmige Aufnahme 5 ist gemeinsam mit einstückig daran angebundenen Füßen mittels eines Druckgussverfahrens hergestellt. Die Ablauföffnung 9 ist durch einen Werkzeugschieber in die Wandung der topfförmigen Aufnahme eingebracht.

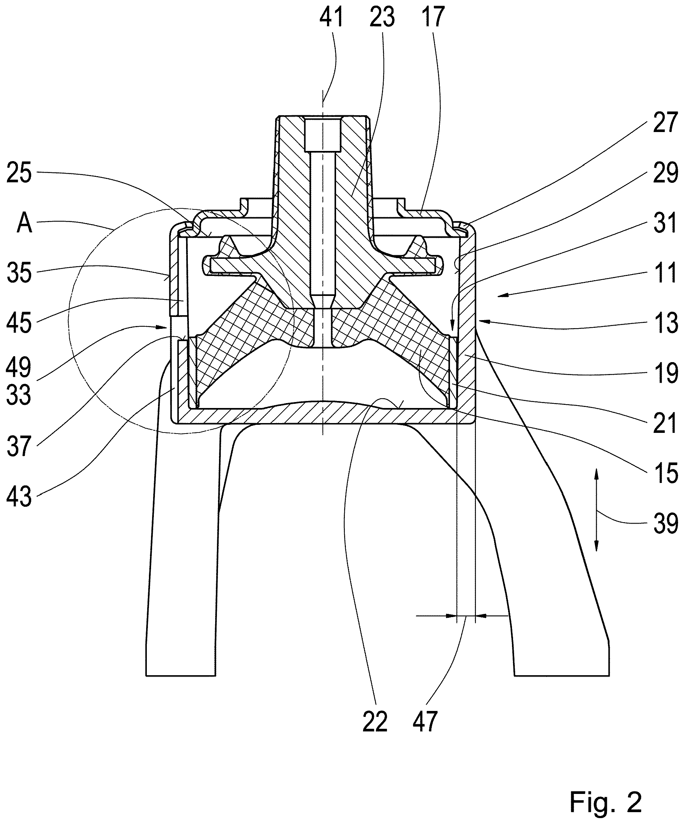

Aus Fig. 2 geht ein axial dämpfendes Elastomerlager 11 gemäß der Erfindung vor, welches als sog. trockenes Elastomerlager ohne Dämpfungsfluid ausgebildet ist. Wesentliche Bestandteile des Elastomerlagers sind eine topfförmige Aufnahme 13, eine darin angeordnete elastomere Tragfeder 15 und ein die topfförmige Aufnahme 13 verschließendes Deckelteil 17. Zwischen der elastomeren Tragfeder 15 und einer Umfangswandung 19 der topfförmigen Aufnahme 13 ist ein Ring 21 aus Kunststoff angeordnet, der haftend mit der elastomeren Tragfeder 15 verbunden ist und gleichzeitig an einem Boden 22 der topfförmigen Aufnahme anliegt. Weiterhin ist ein Kernstück 23 zur Anbindung des Elastomerlagers 11 an ein zu dämpfendes Aggregat haftend mit der elastomeren Tragfeder 15 verbunden.

Das Deckelteil 17 wird randseitig von einem umlaufenden Absatz 25 der topfförmigen Aufnahme 13 aufgenommen und wird ist dort durch einen mittels Rollbördeln umgelegten Bördelrand 27 festgelegt.

Bauartbedingt ist zwischen einer Innenumfangsfläche 29 der Umfangswandung 19 und der elastomeren Tragfeder 15 ein umlaufender, schöpfender Geometriebereich 31 ausgebildet. Der schöpfende Geometriebereich 31 wird über eine Ablauföffnung 33 mit einem, bei Betrachtung auf eine Außenumfangsfläche 35 der Umfangswandung 19, quadratischen Querschnitt mit abgerundeten Ecken entwässert. Eine dem Boden 22 der topfförmigen Aufnahme 13 zugewandte Seite einer Wandung 37 der Ablauföffnung 33 liegt im Wesentlichen auf gleicher Höhe mit der dem Boden 22 abgewandten Stirnseite des Ringes 21 aus Kunststoff. Auf diese Weise ist eine restlose Entwässerung des schöpfenden Geometriebereichs 31 gewährleistet.

Die topfförmige Aufnahme 13 ist im vorliegenden Ausführungsbeispiel zusammen mit einstückig daran angebundenen Füßen mittels Urformen im Aluminium-Druckgussverfahren hergestellt. Alternativ ist auch ein Urformen im Kunststoff-Spritzgießverfahren möglich. Eine für das Urformen erforderliche Entformungsrichtung 39 verläuft richtungsgleich mit einer Mittelachse 41 des Elastomerlagers 11, die in diesem Ausführungsbeispiel mit der Mittelachse 41 der topfförmigen Aufnahme 13 identisch ist. In die Außenumfangsfläche 35 der Umfangswandung 19 ist eine erste als Nut ausgebildete Freimachung 43 eingelassen, die sich von einem bodenseitigen Ende der topfförmigen Aufnahme 13 in Entformungsrichtung 39 bis zu der Ablauföffnung 33 erstreckt. Die Innenumfangsfläche 29 der Umfangswandung 19 ist von deren bodenseitigen Ende bis in Höhe der Ablauföffnung 33 in Umfangsrichtung unterbrechungsfrei ausgebildet, um eine vollflächige Anlage für den Ring 21 aus Kunststoff bereitzustellen. In die Innenumfangsfläche 29 der Umfangswandung 19 ist eine zweite als Nut ausgebildete Freimachung 45 eingelassen, die sich von der dem Boden 22 der topfförmigen Aufnahme 13 abgewandten Seite in Entformungsrichtung 39 bis zu der Ablauföffnung 33 erstreckt. Die Tiefen der ersten als Nut ausgebildeten Freimachung 43 und der zweiten als Nut ausgebildeten Freimachung 45 in einer Richtung senkrecht zur Entformungsrichtung 39 sind im Wesentlichen identisch und entsprechen in Summe einer Wandstärke 47 der Umfangswandung 19. Die erste als Nut ausgebildete Freimachung 43 und die zweite als Nut ausgebildete Freimachung 45 weisen einen gemeinsamen Überlappungsbereich 49 auf, der gleichzeitig die Ablauföffnung 33 bildet.

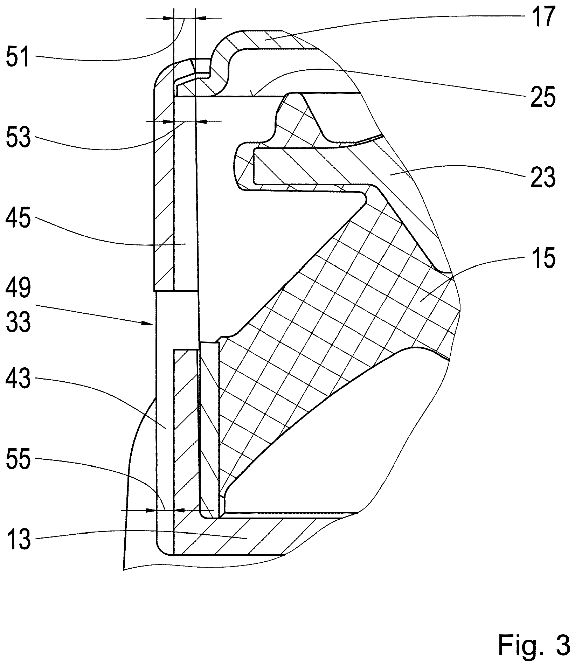

In Fig. 3 sind das Deckelteil 17, das Kernstück 23, die elastomere Tragfeder 15 und die topfförmige Aufnahme 13 angedeutet dargestellt. Ferner ist zu erkennen, dass eine Tiefe 51 des umlaufenden Absatzes 25 einer Tiefe 53 der zweiten als Nut ausgebildeten Freimachung 45 entspricht. Die Tiefe 53 der zweiten als Nut ausgebildeten Freimachung 45 entspricht zusammen mit einer Tiefe 55 der ersten als Nut ausgebildeten Freimachung 43. Die erste als Nut ausgebildete Freimachung 43 und die zweite als Nut ausgebildete Freimachung 45 überlappen sich in dem gemeinsamen Überlappungsbereich 49 und bilden dort die Ablauföffnung 33 aus.

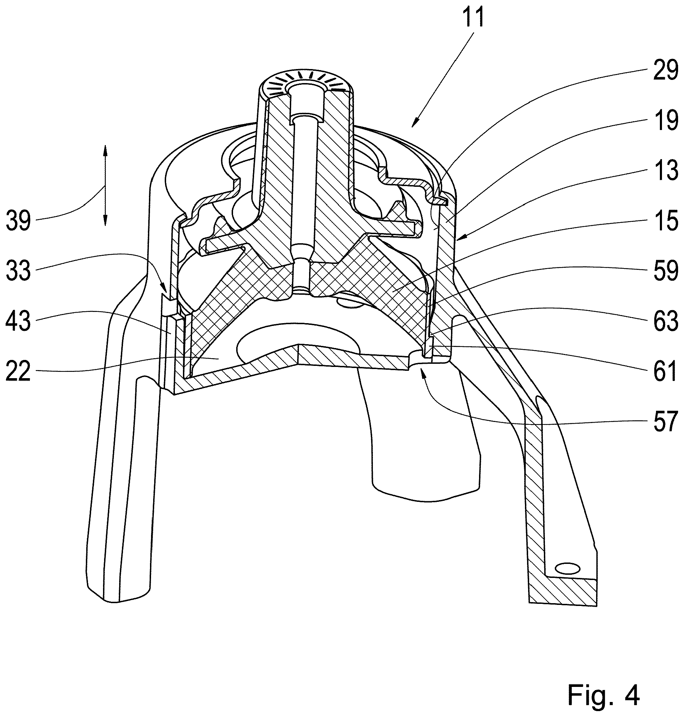

Fig. 4 zeigt ein alternatives Befestigungskonzept für die elastomere Tragfeder 15. Hierzu ist der Boden 22 der topfförmigen Aufnahme 13 mit einem Funktionsdurchbruch 57 versehen, welcher sich in Entformungsrichtung 39 erstreckt und daher in einem Arbeitsgang mit der topfförmigen Aufnahme 13 durch Urformen hergestellt werden kann. Die elastomere Tragfeder 15 ist im Bereich der dem Boden 22 zugewandten Innenumfangsfläche 29 der Umfangswandung 19 von einem Kunststoffring 59 umgeben. Der Kunststoffring 59 weist an seinem dem Boden 22 zugewandten Ende zumindest eine, vorzugsweise jedoch mehrere Rastnasen 61 auf. Die Rastnase 61 erstreckt sich bis in den Funktionsdurchbruch 57 hinein und stellt zusammen mit einem formkorrespondierenden Vorsprung 63 an der dem Boden 22 zugewandten Seite der Innenumfangsfläche 29 eine Schnappverbindung dar. Auf diese Weise ist die elastomere Tragfeder 15 mittelbar über den mit ihr haftend verbundenen Kunststoffring 59 an den Boden 22 der topfförmigen Aufnahme 13 angebunden. Bei dem Elastomerlager 11 handelt es sich wiederum um ein sog. trockenes Elastomerlager ohne Dämpfungsfluid.

Die bereits in Fig. 2 und Fig. 3 dargestellte Ablauföffnung 33 mit der ersten als Nut ausgebildeten Freimachung 43 ist in Fig. 4 perspektivisch geschnitten dargestellt.

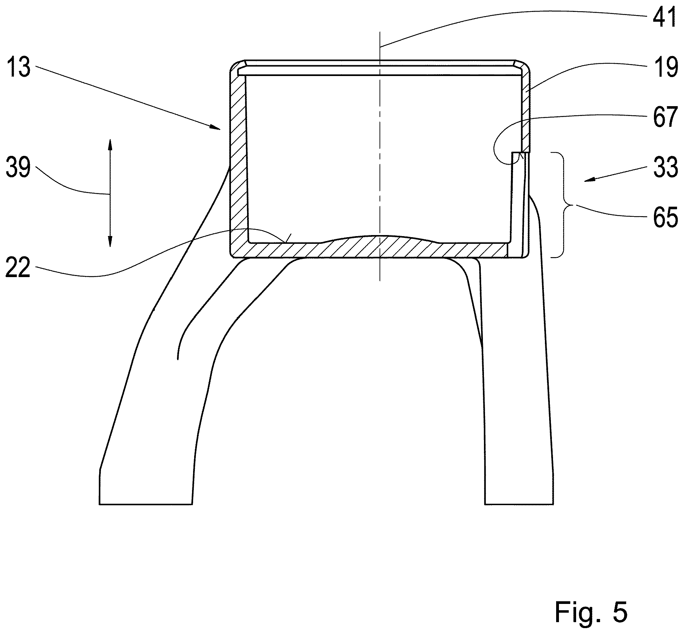

Die Fig. 5 zeigt eine als Schlitz ausgebildete Freimachung 65, die den Boden 22 und einen Teil der Umfangswandung 19 der topfförmigen Aufnahme 13 durchsetzt und auf diese Weise eine alternative Ausgestaltung der Ablauföffnung 33 bereitstellt. Die als Schlitz ausgebildete Freimachung 65 erstreckt sich wiederum in Entformungsrichtung 39 und kann daher ebenfalls in einem Arbeitsgang mit der topfförmigen Aufnahme 13 durch Urformen hergestellt werden. Bei dieser Ausführung ist ein die elastomere Tragfeder, welche hier nicht dargestellt ist, umgebender, ebenfalls nicht dargestellter, Ring vorzugsweise aus Stahl gebildet, um die als Schlitz ausgebildete Freimachung 65 ohne unzulässige Verformung überbrücken zu können. Bei einem alternativ aus Kunststoff gebildeten Ring wäre dies nicht unbedingt gewährleistet. Die als Schlitz ausgebildete Freimachung 65 erstreckt sich in Richtung der dem Boden 22 abgewandten Seite der topfförmigen Aufnahme 13 mit einem Wandabschnitt 67 bis über den nicht dargestellten Ring aus Stahl. Damit ist gewährleistet, dass sich Wasser, welches sich oberhalb der nicht dargestellten elastomeren Tragfeder 15 angesammelt hat, sicher abgeführt werden kann. Je nachdem, wie weit sich die als Schlitz ausgebildete Freimachung 65 in Richtung der Mittelachse 41 erstreckt, kann mit der Ablauföffnung 33 ggf. auch der Bereich zwischen elastomerer Tragfeder 15 und Boden 22 entwässert werden.

### Bezugszeichen

- 1: Elastomerlager gemäß Stand der Technik
- 3: Elastomere Tragfeder gemäß Stand der Technik
- 5: Topfförmige Aufnahme gemäß Stand der Technik
- 7: Deckelteil gemäß Stand der Technik
- 9: Ablauföffnung gemäß Stand der Technik
- 11: Elastomerlager
- 13: Topfförmige Aufnahme
- 15: Elastomere Tragfeder
- 17: Deckelteil
- 19: Umfangswandung der topfförmigen Aufnahme
- 21: Ring aus Kunststoff
- 22: Boden der topfförmigen Aufnahme
- 23: Kernstück
- 25: Umlaufender Absatz
- 27: Bördelrand
- 29: Innenumfangsfläche der Umfangswandung
- 31: Schöpfender Geometriebereich
- 33: Ablauföffnung
- 35: Außenumfangsfläche der Umfangswandung
- 37: Wandung der Ablauföffnung
- 39: Entformungsrichtung
- 41: Mittelachse
- 43: Erste als Nut ausgebildete Freimachung
- 45: Zweite als Nut ausgebildete Freimachung
- 47: Wandstärke der Umfangswandung
- 49: Gemeinsamer Überlappungsbereich
- 51: Tiefe des umlaufenden Absatzes
- 53: Tiefe der zweiten als Nut ausgebildeten Freimachung
- 55: Tiefe der ersten als Nut ausgebildeten Freimachung
- 57: Funktionsdurchbruch
- 59: Kunststoffring
- 61: Rastnasen
- 63: Vorsprung
- 65: Als Schlitz ausgebildete Freimachung
- 67: Wandabschnitt

## Patentansprüche

1. Axial dämpfendes Elastomerlager (11), insbesondere für ein Kraftfahrzeug, mit einer topfförmigen Aufnahme (13) zur umschließenden Aufnahme einer elastomeren Tragfeder (15), wobei die topfförmige Aufnahme (13) durch Urformen hergestellt und in einer Entformungsrichtung (39) entformbar ist und eine Umfangswandung (19) mit zumindest einer Ablauföffnung (33) aufweist, die eine sich in der Entformungsrichtung (39) erstreckende Freimachung (43, 45, 65) aufweist, **dadurch gekennzeichnet, dass** die Freimachung durch eine erste (43) und eine zweite Nut (45) ausgebildet ist, wobei die erste (43) und die zweite Nut (45) in unterschiedliche Umfangsflächen (29, 35) der Umfangswandung (19) eingelassen sind und einen gemeinsamen Überlappungsbereich (49) ausbilden.

2. Axial dämpfendes Elastomerlager (11) nach Anspruch 1, **dadurch gekennzeichnet, dass** die erste Nut (43) in eine Außenumfangsfläche (35) der Umfangswandung (19) im Bereich der einem Boden (22) der topfförmigen Aufnahme (13) zugewandten Seite eingelassen ist und die zweite Nut (45) in eine Innenumfangsfläche (29) der Umfangswandung (19) im Bereich der dem Boden (22) der topfförmigen Aufnahme (13) abgewandten Seite eingelassen ist.

3. Axial dämpfendes Elastomerlager (11) nach Anspruch 2, **dadurch gekennzeichnet, dass** die Innenumfangsfläche (29) der Umfangswandung (19) im Bereich der dem Boden (22) der topfförmigen Aufnahme (13) zugewandten Seite einen stetigen Verlauf aufweist.

4. Axial dämpfendes Elastomerlager (11) nach Anspruch 2 oder 3, **dadurch gekennzeichnet, dass** die Außenumfangsfläche (35) der Umfangswandung (19) im Bereich der dem Boden (22) der topfförmigen Aufnahme (13) abgewandten Seite einen stetigen Verlauf aufweist.

5. Axial dämpfendes Elastomerlager (11) nach einem der Ansprüche 2 bis 4, **dadurch gekennzeichnet, dass** die Innenumfangsfläche (29) der Umfangswandung (19) im Bereich der dem Boden (22) der topfförmigen Aufnahme (13) abgewandten Seite einen umlaufenden Absatz (25) zur Aufnahme eines Deckelteils (17) aufweist.

6. Axial dämpfendes Elastomerlager (11) nach Anspruch 5, **dadurch gekennzeichnet, dass** die Tiefe (51) des Absatzes (25) im Wesentlichen der Tiefe (53) der zweiten Nut (45) entspricht.

7. Axial dämpfendes Elastomerlager (11) nach einem der vorhergehenden Ansprüche, **dadurch gekennzeichnet, dass** die Ablauföffnung (33) im Querschnitt im Wesentlichen als Rechteck, insbesondere als Quadrat, mit verrundeten Ecken ausgebildet ist.

8. Axial dämpfendes Elastomerlager (11) nach einem der vorhergehenden Ansprüche, **dadurch gekennzeichnet, dass** zumindest die topfförmige Aufnahme (13) aus Aluminium, insbesondere aus Aluminium-Druckguss, gebildet ist.

9. Axial dämpfendes Elastomerlager (11) nach den Ansprüchen 5 und 8, **dadurch gekennzeichnet, dass** die topfförmige Aufnahme (13) und das Deckelteil (17) durch Verrollen gefügt sind.

10. Axial dämpfendes Elastomerlager (11) nach einem der Ansprüche 1 bis 7, **dadurch gekennzeichnet, dass** zumindest die topfförmige Aufnahme (13) aus Spritzguss-Kunststoff, insbesondere aus faserverstärktem Spritzguss-Kunststoff, gebildet ist.

11. Axial dämpfendes Elastomerlager (11) nach einem der vorhergehenden Ansprüche, **dadurch gekennzeichnet, dass** das Elastomerlager (11) als sog. trockenes Elastomerlager ohne Dämpfungsfluid ausgebildet ist.

12. Axial dämpfendes Elastomerlager (11) nach einem der Ansprüche 1 bis 10, **dadurch gekennzeichnet, dass** das Elastomerlager (11) als Hydrolager mit einem Dämpfungsfluid ausgebildet ist.

## Claims

1. Axially damping elastomer bearing (11), in particular for a motor vehicle, having a pot-shaped receiving member (13) for receiving an elastomer suspension spring (15) in an enclosing manner, wherein the pot-shaped receiving member (13) is produced by means of initial moulding and can be removed from the mould in a demoulding direction (39) and has a peripheral wall (19) having at least one discharge opening (33) which has a cutout (43, 45, 65) which extends in the demoulding direction (39), **characterised in that** the cutout is formed by means of a first groove (43) and a second groove (45), wherein the first groove (43) and the second groove (45) are introduced in different peripheral faces (29, 35) of the peripheral wall (19) and form a common overlapping region (49).

2. Axially damping elastomer bearing (11) according to Claim 1, **characterised in that** the first groove (43) is introduced in an outer peripheral face (35) of the peripheral wall (19) in the region of the side facing a base (22) of the pot-shaped receiving member (13) and the second groove (45) is introduced in an inner peripheral face (29) of the peripheral wall (19) in the region of the side facing away from the base (22) of the pot-shaped receiving member (13).

3. Axially damping elastomer bearing (11) according to Claim 2, **characterised in that** the inner peripheral face (29) of the peripheral wall (19) has a constant extent in the
region of the side facing the base (22) of the pot-shaped receiving member (13).

4. Axially damping elastomer bearing (11) according to Claim 2 or 3, **characterised in that** the outer peripheral face (35) of the peripheral wall (19) has a constant extent in the region of the side facing away from the base (22) of the pot-shaped receiving member (13).

5. Axially damping elastomer bearing (11) according to any one of Claims 2 to 4, **characterised in that** the inner peripheral face (29) of the peripheral wall (19) has in the region of the side facing away from the base (22) of the pot-shaped receiving member (13) a peripheral shoulder (25) for receiving a cover portion (17).

6. Axially damping elastomer bearing (11) according to Claim 5, **characterised in that** the depth (51) of the shoulder (25) substantially corresponds to the depth (53) of the second groove (45).

7. Axially damping elastomer bearing (11) according to any one of the preceding claims, **characterised in that** the discharge opening (33) is constructed in cross-section substantially as a rectangle, in particular as a square, with rounded edges.

8. Axially damping elastomer bearing (11) according to any one of the preceding claims, **characterised in that** at least the pot-shaped receiving member (13) is formed from aluminium, in particular from die-cast aluminium.

9. Axially damping elastomer bearing (11) according to Claims 5 and 8, **characterised in that** the pot-shaped receiving member (13) and the covering portion (17) are joined by means of rolling.

10. Axially damping elastomer bearing (11) according to any one of Claims 1 to 7, **characterised in that** at least the pot-shaped receiving member (13) is formed from injection-moulded plastics material, in particular fibre-reinforced injection-moulded plastics material.

11. Axially damping elastomer bearing (11) according to any one of the preceding claims, **characterised in that** the elastomer bearing (11) is constructed as a so-called dry elastomer bearing without damping fluid.

12. Axially damping elastomer bearing (11) according to any one of Claims 1 to 10, **characterised in that** the elastomer bearing (11) is constructed as a hydraulic bearing with a damping fluid.

## Revendications

1. Palier en élastomère à amortissement axial (11), plus particulièrement pour un véhicule à moteur, avec un logement en forme de godet (13) pour le logement enveloppant d'un ressort de support en élastomère (15), le logement en forme de godet (13) étant réalisé par formage primaire et pouvant être démoulé dans une direction de démoulage (39) et comprend une paroi circonférentielle (19) avec au moins une ouverture de sortie (33), qui comprend un dégagement (43, 45, 65) s'étendant dans la direction de démoulage (39), **caractérisé en ce que** le dégagement est constitué d'une première rainure (43) et d'une deuxième rainure (45), la première rainure (43) et la deuxième (45) étant encastrées dans différentes surfaces circonférentielles (29, 35) de la paroi circonférentielle (19) et forment une zone de superposition commune (49).

2. Palier en élastomère à amortissement axial (11) selon la revendication 1, **caractérisé en ce que** la première rainure (43) est encastrée dans un surface circonférentielle externe (35) de la paroi circonférentielle (19) au niveau du côté orienté vers un fond (22) du logement en forme de godet (13) et la deuxième rainure (45) est encastrée dans une surface circonférentielle interne (29) de la paroi circonférentielle (19) au niveau du côté opposé au fond (22) du logement en forme de godet (13).

3. Palier en élastomère à amortissement axial (11) selon la revendication 2, **caractérisé en ce que** la surface circonférentielle interne (29) de la paroi circonférentielle (19) présente une extension constante au niveau du côté orienté vers le fond (22) du logement en forme de godet (13).

4. Palier en élastomère à amortissement axial (11) selon la revendication 2 ou 3, **caractérisé en ce que** la surface circonférentielle externe (35) de la paroi circonférentielle (19) une extension constante au niveau du côté opposé au fond (22) du logement en forme de godet (13).

5. Palier en élastomère à amortissement axial (11) selon l'une des revendications 2 à 4, **caractérisé en ce que** la surface circonférentielle interne (29) de la paroi circonférentielle (19) comprend, au niveau du côté opposé au fond (22) du logement en forme de godet (13), un épaulement périphérique (25) pour le logement d'une partie de couvercle (17).

6. Palier en élastomère à amortissement axial (11) selon la revendication 5, **caractérisé en ce que** la profondeur (51) de l'épaulement (25) correspond globalement à la profondeur (53) de la deuxième rainure (45).

7. Palier en élastomère à amortissement axial (11) selon l'une des revendications précédentes, **caractérisé en ce que** l'ouverture de sortie (33) présente une section transversale de forme rectangulaire, plus particulièrement carrée, avec des angles arrondis.

8. Palier en élastomère à amortissement axial (11) selon l'une des revendications précédentes, **caractérisé en ce qu'**au moins le logement en forme de godet (13) est constitué d'aluminium, par particulièrement de fonte d'aluminium injectée.

9. Palier en élastomère à amortissement axial (11) selon les revendications 5 et 8, **caractérisé en ce que** le logement en forme de godet (13) et la partie de couvercle (17) sont soudés par roulage.

10. Palier en élastomère à amortissement axial (11) selon l'une des revendications 1 à 7, **caractérisé en ce que** le logement en forme de godet (13) est constitué de matière plastique injectée, plus particulièrement de matière plastique injectée renforcée par des fibres.

11. Palier en élastomère à amortissement axial (11) selon l'une des revendications précédentes, **caractérisé en ce que** le palier en élastomère (11) est conçu comme un palier en élastomère sec sans fluide d'amortissement.

12. Palier en élastomère à amortissement axial (11) selon l'une des revendications 1 à 10, **caractérisé en ce que** le palier en élastomère (11) est conçu comme un palier hydraulique avec un fluide d'amortissement.
